# EUROPEAN PATENT APPLICATION

(11) **EP 4 546 762 A1**
(43) Date of publication of application: **30.04.2025**
(21) Application number: 23909342.0
(22) Date of filing: 12.09.2023
(51) Int. Cl.: H04M 1/02, G06F 1/16, G09F 9/30, G09F 9/33

(54) **FOLDING APPARATUS AND ELECTRONIC DEVICE**

(30) Priority: 26.12.2022 CN 202211676889
(71) Applicant: Huawei Technologies Co., Ltd., Shenzhen, Guangdong 518129 (CN)
(72) Inventor: SHEN, Hewen, Shenzhen, Guangdong 518129 (CN); ZHONG, Ding, Shenzhen, Guangdong 518129 (CN); YU, Lei, Shenzhen, Guangdong 518129 (CN); LIAO, Li, Shenzhen, Guangdong 518129 (CN); YUAN, Yuanhan, Shenzhen, Guangdong 518129 (CN); QIAO, Yadong, Shenzhen, Guangdong 518129 (CN)
(74) Representative: MERH-IP Matias Erny Reichl Hoffmann Patentanwälte PartG mbB
(86) International application number: PCT/CN2023/118294
(87) International publication number: WO 2024/139405

(57) **Abstract**

A foldable apparatus and an electronic device are provided. The foldable apparatus includes a fastened piece and a rotating assembly. The rotating assembly includes a first rotating arm (21) and a second rotating arm (22) that are arranged on two sides of the fastened piece in a width direction of the foldable apparatus, and the first rotating arm (21) and the second rotating arm (22) can rotate relative to the fastened piece, to enable the foldable apparatus to be in a folded state or an unfolded state. The foldable apparatus further includes a stopper (5), and the stopper (5) is fastened to the fastened piece or connected to the fastened piece in a position-limiting manner. When the first rotating arm (21) and the second rotating arm (22) rotate opposite to each other until the foldable apparatus is in the unfolded state, the stopper (5) abuts against the rotating assembly, to restrict the first rotating arm (21) and the second rotating arm (22) from continuing to rotate opposite to each other, so that the foldable apparatus and the electronic device are limited to the unfolded state. This improves use experience of the electronic device in the unfolded state, makes a flexible display flatter in the unfolded state, reduces pulling of the foldable apparatus on the flexible display in the unfolded state, and improves safety and a service life of the flexible display.

## Description

This application claims priority to Chinese Patent Application No. 202211676889.6, filed with the China National Intellectual Property Administration on December 26, 2022 and entitled "FOLDABLE APPARATUS AND ELECTRONIC DEVICE", which is incorporated herein by reference in its entirety.

### TECHNICAL FIELD

This application relates to the field of electronic device technologies, and in particular, to a foldable apparatus and an electronic device.

### BACKGROUND

A foldable electronic device includes a housing, a foldable apparatus, and a flexible display. The housing includes a left housing and a right housing that are disposed separately, the folding assembly is located between the left housing and the right housing, and the flexible display is mounted on the left housing and the right housing. When the left housing and the right housing are folded under driving of the folding assembly, the flexible display can be driven to fold, so that the electronic device is in a folded state. In the folded state, the electronic device has a small size, and is easy to store. When the left housing and the right housing are unfolded under driving of the folding assembly, the flexible display is driven to unfold, so that the electronic device is in an unfolded state. In the unfolded state, the display of the electronic device is large. This improves user experience.

Currently, the electronic device cannot be maintained in the unfolded state during use, resulting in poor flatness of the flexible display of the electronic device in the unfolded state.

### SUMMARY

This application provides a foldable apparatus. The foldable apparatus includes a fastened piece and a rotating assembly. The rotating assembly includes a first rotating arm and a second rotating arm that are arranged on two sides of the fastened piece in a width direction of the foldable apparatus, and the first rotating arm and the second rotating arm can rotate relative to the fastened piece, to enable the foldable apparatus to be in a folded state or an unfolded state. The foldable apparatus further includes a stopper, and the stopper is fastened to the fastened piece or connected to the fastened piece in a position-limiting manner. When the first rotating arm and the second rotating arm rotate opposite to each other until the foldable apparatus is in the unfolded state, the stopper abuts against the rotating assembly, to restrict the first rotating arm and the second rotating arm from continuing to rotate opposite to each other, so that the foldable apparatus and an electronic device are limited to the unfolded state. This improves use experience of the electronic device in the unfolded state, makes a flexible display flatter in the unfolded state, reduces pulling of the foldable apparatus on the flexible display in the unfolded state, and improves safety and a service life of the flexible display.

In a specific embodiment, the stopper has a first abutting surface, and the rotating assembly has a second abutting surface. When the foldable apparatus is in the unfolded state, the second abutting surface abuts against the first abutting surface; and when the foldable apparatus is in the folded state, the second abutting surface is away from the first abutting surface.

In a specific embodiment, an included angle between the first abutting surface and the width direction of the foldable apparatus ranges from 85° to 95°. An included angle between each of the first abutting surface and the second abutting surface and the width direction of the foldable apparatus can change an included angle between the first rotating arm and the second rotating arm that is formed when the foldable apparatus is in the unfolded state, so that the included angle between the first rotating arm and the second rotating arm is a preset included angle, to meet use of the user in the preset included angle that is formed when the foldable apparatus is in the unfolded state.

In a specific embodiment, the first abutting surface is perpendicular to the width direction of the foldable apparatus. When the foldable apparatus and the electronic device are in the unfolded state, the included angle between the first rotating arm and the second rotating arm is 180°. In this state, an included angle between a first housing and a second housing is 180°, so that the flexible display is in the unfolded state, and a risk of generating a crease on the flexible display is reduced.

In a specific embodiment, there is mounting space between the fastened piece and the rotating assembly, and at least a part of the stopper is located in the mounting space. The mounting space has an opening in a height direction of the foldable apparatus, and the stopper can be mounted in the mounting space through the opening, so that the stopper is accommodated in the mounting space, to reduce space occupied by the stopper.

In a specific embodiment, a cross-sectional area of the mounting space gradually decreases in a direction close to the opening. That is, the cross-sectional area of the mounting space gradually decreases in the height direction from bottom to up (a direction close to the flexible display). To be specific, a cross-sectional area of the mounting space at a position of the opening is large, so that the stopper is easily mounted in the mounting space; and a cross-sectional area of the mounting space at an end away from the flexible display is small, so that a side wall of the mounting space can provide a stopping function for the stopper, to restrict the stopper from being detached from the mounting space through a lower end opening of the mounting space.

In a specific embodiment, the fastened piece has a first connection surface, and the first connection surface encloses a part of the mounting space. The stopper has a second connection surface, and the first connection surface is in surface contact with and fastened to the second connection surface. The first connection surface and the second connection surface are perpendicular to the width direction of the foldable apparatus.

In a specific embodiment, the fastened piece has a first connection surface, and the first connection surface encloses a part of the mounting space. The stopper has a second connection surface, and the first connection surface is in surface contact with and fastened to the second connection surface. The first connection surface and the second connection surface are both inclined relative to the width direction of the foldable apparatus. When the stopper is mounted in the mounting space, the inclined first connection surface and the inclined second connection surface can play a guiding role, to facilitate mounting of the stopper. In addition, with reference to a figure and a figure, a size of the stopper extending into the mounting space in the height direction can be changed by changing a fitting area of the first connection surface and the second connection surface. When the fitting area of the first connection surface and the second connection surface decreases, the stopper is positioned high, so that a position at which the first abutting surface of the stopper abuts against the second abutting surface of the rotating assembly is high. When the foldable apparatus is in the unfolded state, the included angle between the first rotating arm and the second rotating arm is less than 180°. That is, a stopping angle of the stopper to the rotating assembly can be reduced. In this case, the stopping angle is an angle that can meet a user requirement.

In a specific embodiment, the stopper further includes a protrusion portion protruding in the width direction of the foldable apparatus, and the protrusion portion is located above the mounting space. In a process of mounting the stopper in the mounting space, when the stopper moves downward, the stopper can abut against the fastened piece, to restrict the stopper from being detached from the mounting space through a lower end opening of the mounting space.

In a specific embodiment, the stopper includes a first stopper and a second stopper. In the width direction of the foldable apparatus, the first stopper is configured to abut against the first rotating arm, and the second stopper is configured to abut against the second rotating arm, so that the foldable apparatus is limited to the unfolded state. When the foldable apparatus includes two stoppers, a limiting function on the rotating assembly can be further improved, so that reliability and stability of the foldable apparatus in the unfolded state are further improved, and flatness of the flexible display is improved.

In a specific embodiment, the foldable apparatus further includes a synchronization gear set. The synchronization gear set includes at least two gears, the at least two gears are distributed in the width direction of the foldable apparatus and mesh with each other, and the first rotating arm and the second rotating arm are respectively connected to two gears located at edges. The synchronization gear assembly is configured to transfer a motion between the first rotating arm and the second rotating arm, so that the first rotating arm and the second rotating arm move synchronously in a folding process and an unfolding process of the foldable apparatus, thereby driving the first housing and the second housing to move synchronously, and improving stability and reliability of the foldable apparatus and the electronic device in the unfolding process and the folding process.

In a specific embodiment, the foldable apparatus further includes a damping assembly. The damping assembly includes an elastic member and a cam that abuts against the elastic member. The cam is located between the gear and the elastic member in a length direction of the foldable apparatus. In the length direction of the foldable apparatus, the cam has a first concave-convex surface, and the gear has a second concave-convex surface facing the cam. During rotation of the first rotating arm and the second rotating arm, the gear can rotate relative to the cam, to enable the first concave-convex surface to mesh with the second concave-convex surface. The damping assembly can maintain the foldable apparatus in the unfolded state or the folded state, and the damping assembly is configured to provide a damping force for the first rotating arm and the second rotating arm.

An embodiment of this application further provides an electronic device. The electronic device includes a first housing, a second housing, a flexible display, and the foregoing foldable apparatus. The first housing and the second housing are located on two sides of the foldable apparatus. The flexible display covers the first housing, the second housing, and the foldable apparatus, and is fastened to the first housing and the second housing.

It should be understood that the foregoing general descriptions and the following detailed descriptions are merely examples, and are not intended to limit this application.

### BRIEF DESCRIPTION OF DRAWINGS

FIG. 1 is a diagram of a partial structure of a foldable apparatus according to this application in a specific embodiment;
FIG. 2 is a diagram of a structure of FIG. 1 in which a synchronization gear set and a damping assembly are removed;
FIG. 3 is a partial exploded view of FIG. 2;
FIG. 4 is a partial side view of FIG. 2 in a specific embodiment, where the foldable apparatus is in an unfolded state;
FIG. 5 is a diagram of a structure of FIG. 4 in which the foldable apparatus is in a folded state;
FIG. 6 is a partial side view of FIG. 2 in another specific embodiment, where the foldable apparatus is in an unfolded state;
FIG. 7 is a diagram of a structure of a stopper in FIG. 3 in a specific embodiment;
FIG. 8 is a side view of FIG. 7;
FIG. 9 is a diagram of a structure of a stopper in FIG. 3 in another specific embodiment; and
FIG. 10 is a side view of FIG. 9.

### Reference numerals:

11: mounting bracket;
   111: first connection surface;
12: pin shaft;
13: upper cover;
21: first rotating arm;
22: second rotating arm;
23: connection portion;
   231: second abutting surface;
   232: mounting space;
24: rotating portion;

3: synchronization gear set;
4: damping assembly;
   41: cam;
   42: elastic member;
5: stopper;
   51: first abutting surface;
   52: second connection surface;
   53: protrusion portion;
   54: avoidance portion;
   55: first stopper;
   56: second stopper.

The accompanying drawings herein are incorporated into this specification and constitute a part of this specification, show embodiments conforming to this application, and are used together with this specification to explain a principle of this application.

### DESCRIPTION OF EMBODIMENTS

To better understand technical solutions of this application, the following describes embodiments of this application in detail with reference to the accompanying drawings.

In a specific embodiment, the following further describes this application in detail by using specific embodiments and with reference to the accompanying drawings.

An embodiment of this application provides an electronic device. An embodiment of this application provides an electronic device. The electronic device includes any device having a foldable screen function, for example, a mobile phone, a tablet computer, a personal digital assistant (personal digital assistant, PDA), a notebook computer, a vehicle-mounted computer, a foldable display device, a foldable display, or a wearable device. A specific form of the electronic device is not specially limited in embodiments of this application. For ease of description, the following uses an example in which the electronic device is a mobile phone for description. The following describes the electronic device in this application by using specific embodiments.

The electronic device includes a foldable apparatus, a screen, a first housing, and a second housing. The screen may be a flexible display, and the flexible display is configured to display an image, a video, and the like. A specific type of the flexible display in this application is not limited. For example, the flexible display may be an active-matrix organic light-emitting diode (active-matrix organic light-emitting diode, AMOLED) display. The AMOLED display is used as a self-luminous display, and a back light module (back light module, BLM) does not need to be disposed. Therefore, when a substrate of the AMOLED display is made of a flexible resin material, for example, polyethylene terephthalate (polyethylene terephthalate, PET), the AMOLED display can have a bendable characteristic. For example, the flexible display may alternatively be an organic light-emitting diode (organic light-emitting diode, OLED) display, a mini light-emitting diode (mini organic light-emitting diode) display, a micro light-emitting diode (micro organic light-emitting diode) display, a micro organic light-emitting diode (micro organic light-emitting diode) display, a quantum dot light-emitting diode (quantum dot light-emitting diode, QLED) display, or the like.

The first housing and the second housing are spaced from each other, and the first housing and the second housing are configured to mount components such as a battery, a circuit board, a camera, a headset, an earpiece, a button, and a battery of the electronic device. The first housing includes a first middle frame and a first rear cover, the second housing includes a second middle frame and a second rear cover, and the first middle frame and the second middle frame are configured to carry the flexible display. To be specific, the flexible display is fastened (for example, pasted) to the first middle frame and the second middle frame, so that the flexible display is kept as flat as possible during use, and a non-display surface of the flexible display is protected. The first rear cover and the second rear cover are configured to protect components in the first housing and the second housing. The foldable apparatus is located between the first housing and the second housing, and is connected to the first housing and the second housing. In some embodiments, the first housing is provided with a first groove, and the second housing is provided with a second groove. One part of the foldable apparatus is mounted in the first groove, and the other part is mounted in the second groove. In some possible implementations, the foldable apparatus may be connected to the first groove and the second groove by using a screw or in another manner.

During use of the electronic device, the foldable apparatus includes at least an unfolded state and a folded state. In the unfolded state, the first housing and the second housing are roughly located in a same plane, so that the flexible display is approximately a plane. In this case, the flexible display is exposed, a user can operate the flexible display, and the flexible display can display information such as an image or a video, to implement large-screen display and improve viewing experience of the user. In addition, when the foldable apparatus is in the unfolded state, the first housing and the second housing can rotate toward each other (that is, the first housing and the second housing rotate relative to each other in a manner of approaching each other), to drive the foldable apparatus to be folded. In a folding process, an end that is of the first housing and that is away from the foldable apparatus and an end that is of the second housing and that is away from the foldable apparatus approach each other, so that the electronic device is in a folded state. In addition, the electronic device in this embodiment is a flexible display infolding structure. In the folded state, the flexible display is located in space enclosed by the first middle frame and the second middle frame after the first middle frame and the second middle frame are folded. In this case, the flexible display is not exposed, the user cannot operate the flexible display, and the electronic device is easy to store and carry. In addition, when the foldable apparatus is in the folded state, the first housing and the second housing can rotate (rotation directions are opposite to rotation directions corresponding to a case in which the foldable apparatus is folded), to drive the foldable apparatus to be unfolded, so that the electronic device is in an unfolded state. Therefore, in this application, the foldable apparatus is configured to implement folding and unfolding of the electronic device.

A person skilled in the art may understand that the structure shown in this embodiment of this application does not constitute a specific limitation on the electronic device. In some other possible implementations of this application, the electronic device may include more or fewer components than those shown in the figure, some components may be combined, some components may be split, or there may be a different component arrangement.

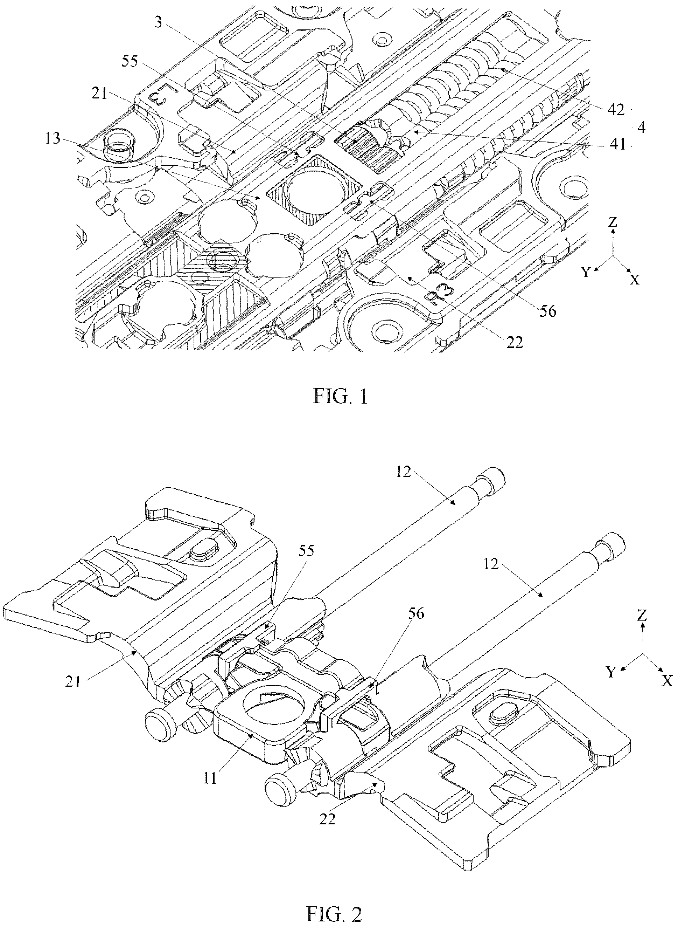

Specifically, as shown in FIG. 1, the foldable apparatus includes a fastened piece and a rotating assembly. The rotating assembly includes a first rotating arm 21 and a second rotating arm 22 that are arranged in a width direction X of the foldable apparatus, and the first rotating arm 21 and the second rotating arm 22 can rotate relative to the fastened piece, to enable the foldable apparatus to be in an unfolded state or a folded state. The first rotating arm 21 and the second rotating arm 22 separately rotate around a pin shaft 12. The fastened piece is fastened relative to the first housing and the second housing of the electronic device, and the foldable apparatus is folded or unfolded around the fastened piece. An extension direction of the fastened piece is defined as a length direction Y of the foldable apparatus. In the electronic device that is in an unfolded state, an arrangement direction of the first housing and the second housing is defined as the width direction X of the foldable apparatus, and a direction perpendicular to both the length direction Y and the width direction X of the foldable apparatus is defined as a height direction Z of the foldable apparatus.

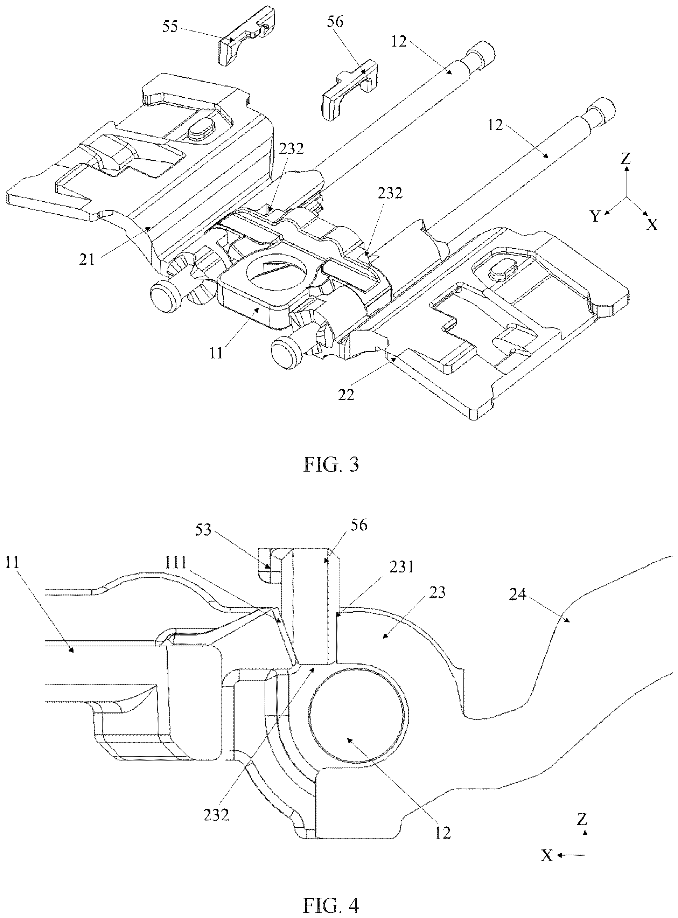

During use of the electronic device, when the first rotating arm 21 and the second rotating arm 22 rotate opposite to each other until the foldable apparatus is in the unfolded state shown in FIG. 1 and FIG. 4, the left housing and the right housing are roughly located in a same plane. That is, the first rotating arm 21 and the second rotating arm 22 are approximately 180° apart. In this case, the flexible display of the electronic device is unfolded, thereby helping the user operate and view the flexible display. However, when the first rotating arm 21 and the second rotating arm 22 continue to rotate opposite to each other under an external force, an included angle between the left housing and the right housing and an included angle between the first rotating arm 21 and the second rotating arm 22 are both greater than 180°. This not only affects use of the user, but also pulls the flexible display, affecting a service life of the flexible display.

In this embodiment of this application, the foldable apparatus further includes a stopper 5. The stopper 5 is fastened to the fastened piece of the foldable apparatus or connected to the fastened piece of the foldable apparatus in a position-limiting manner. As shown in FIG. 4, when the first rotating arm 21 and the second rotating arm 22 rotate opposite to each other until the foldable apparatus is in the unfolded state, the stopper 5 abuts against the rotating assembly, to restrict the first rotating arm 21 and the second rotating arm 22 from continuing to rotate opposite to each other, so that the foldable apparatus and the electronic device are limited to the unfolded state. This improves use experience of the electronic device in the unfolded state, makes the flexible display flatter in the unfolded state, reduces pulling of the foldable apparatus on the flexible display in the unfolded state, and improves safety and a service life of the flexible display.

The fastened piece is a component that is in a static state in a process of folding and unfolding the foldable apparatus. When the stopper 5 is fastened to the fastened piece of the foldable apparatus or connected to the fastened piece of the foldable apparatus in a position-limiting manner, the stopper 5 is also in a static state in the process of folding and unfolding the foldable apparatus. The first rotating arm 21 and the second rotating arm 22 are components that have relative rotations in the process of folding and unfolding the foldable apparatus.

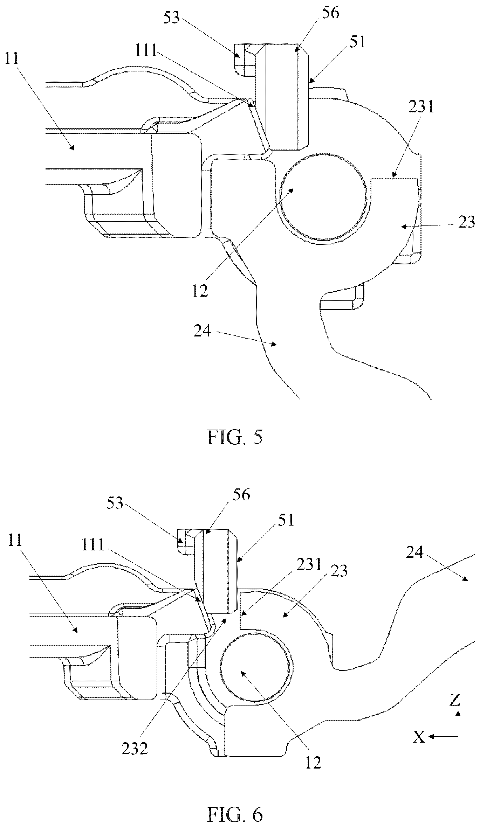

Specifically, as shown in FIG. 4 to FIG. 10, the stopper 5 has a first abutting surface 51, and the rotating assembly has a second abutting surface 231. When the foldable apparatus is in the unfolded state, as shown in FIG. 4, the second abutting surface 231 abuts against the first abutting surface 51, so that the stopper 5 restricts further rotation of the rotating assembly, to maintain the foldable apparatus and the electronic device in the unfolded state. When the user needs to fold the electronic device, the first rotating arm 21 and the second rotating arm 22 rotate toward each other. Because the stopper 5 is disposed on a side on which the first rotating arm 21 and the second rotating arm 22 rotate opposite to each other, the stopper 5 does not prevent the first rotating arm 21 and the second rotating arm 22 from rotating toward each other, so that the first rotating arm 21 and the second rotating arm 22 can rotate toward each other until the foldable apparatus and the electronic device are in the folded state, as shown in FIG. 5, the second abutting surface 231 is away from the first abutting surface 51.

As shown in FIG. 4 and FIG. 5, an included angle between each of the first abutting surface 51 and the second abutting surface 231 and the width direction X of the foldable apparatus ranges from 85° to 95°. For example, the included angle between the first abutting surface 51 and the width direction X of the foldable apparatus may be 85°, 89°, 91°, 92°, or 95°.

The included angle between each of the first abutting surface 51 and the second abutting surface 231 and the width direction X of the foldable apparatus can change an included angle between the first rotating arm 21 and the second rotating arm 22 that is formed when the foldable apparatus is in the unfolded state, so that the included angle between the first rotating arm 21 and the second rotating arm 22 is a preset included angle, to meet use of the user in the preset included angle that is formed when the foldable apparatus is in the unfolded state.

In a specific embodiment, the first abutting surface 51 and the second abutting surface 231 are perpendicular to the width direction X of the foldable apparatus. When the foldable apparatus and the electronic device are in the unfolded state, the included angle between the first rotating arm 21 and the second rotating arm 22 is 180°. In this state, an included angle between the first housing and the second housing is 180°, so that the flexible display is in the unfolded state. In another embodiment, the first abutting surface 51 and the second abutting surface 231 may alternatively be roughly perpendicular to the width direction X of the foldable apparatus, and the included angle may be 91°, 89°, or the like. When the foldable apparatus and the electronic device are in the unfolded state, the included angle between the first rotating arm 21 and the second rotating arm 22 is 179°, 181°, or the like. In this state, an included angle between the first housing and the second housing is 179° or 181°, so that the flexible display is in the unfolded state.

In this embodiment of this application, as shown in FIG. 3, there is mounting space 232 between the fastened piece and the rotating assembly, the mounting space 232 has an opening, the stopper 5 can be mounted in the mounting space 232 through the opening, and the stopper 5 is fastened to the fastened piece or connected to the fastened piece in a position-limiting manner, so that the stopper 5 is accommodated in the mounting space 232, to reduce space occupied by the stopper 5.

The accommodating space 232 may be a groove structure, that is, an upper end that is of the accommodating space 232 and that is close to the flexible display has an opening, and a lower end is closed. The accommodating space 232 may alternatively be a through-hole structure, that is, two ends of the accommodating space 232 in a height direction are open, and when the stopper 5 is mounted in the mounting space 232 through an upper end of the mounting space 232, the opening of the accommodating space 232 is the upper end of the mounting space 232.

In a specific embodiment, as shown in FIG. 4 and FIG. 6, a cross-sectional area of the mounting space 232 gradually decreases in a direction close to the opening. That is, the cross-sectional area of the mounting space 232 gradually decreases in the height direction Z from bottom to up (a direction close to the flexible display). To be specific, a cross-sectional area of the mounting space 232 at a position of the opening is large, so that the stopper 5 is easily mounted in the mounting space 232; and a cross-sectional area of the mounting space 232 at an end away from the flexible display is small, so that a side wall of the mounting space 232 can provide a stopping function for the stopper 5, to restrict the stopper 5 from being detached from the mounting space 232 through a lower end opening of the mounting space 232.

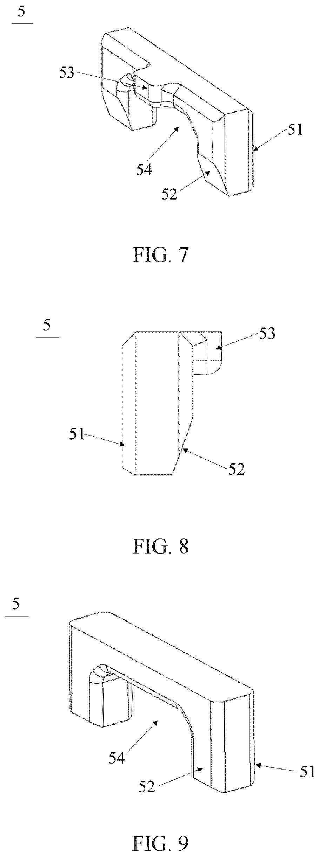

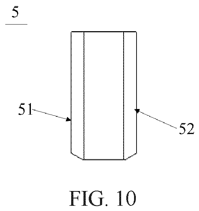

Specifically, as shown in FIG. 4 to FIG. 6, the fastened piece has a first connection surface 111, the first connection surface 111 encloses a part of the mounting space 232, and a side wall of the mounting space 232 is the first connection surface 111 of the fastened piece. The stopper 5 has a second connection surface 52, the first connection surface 111 is in surface contact with and fastened to the second connection surface 52, and the first connection surface 111 and the second connection surface 52 may be welded. There is a preset included angle between each of the first connection surface 111 and the second connection surface 52 and the width direction X of the foldable apparatus. In an embodiment shown in FIG. 9 and FIG. 10, the preset included angle may be 90°. That is, the first connection surface 111 and the second connection surface 52 are perpendicular to the width direction X of the foldable apparatus.

In embodiments shown in FIG. 4 to FIG. 8, the preset included angle between the first connection surface 111 and the width direction X of the foldable apparatus is 90° to 180°, the preset included angle between the second connection surface 52 and the width direction X of the foldable apparatus is 0° to 90°, and the preset included angle between the first connection surface 111 and the width direction X of the foldable apparatus is complementary to the preset included angle between the second connection surface 52 and the width direction X of the foldable apparatus. In this case, the first connection surface 111 and the second connection surface 52 are both inclined relative to the width direction X of the foldable apparatus, and the first connection surface 111 and the second connection surface 52 are in surface contact and are fastened (for example, welded). In this embodiment, when the stopper 5 is mounted in the mounting space 232, the inclined first connection surface 111 and the inclined second connection surface 52 can play a guiding role, to facilitate mounting of the stopper 5. In addition, with reference to FIG. 4 and FIG. 6, a size of the stopper 5 extending into the mounting space 232 in the height direction Z can be changed by changing a fitting area of the first connection surface 111 and the second connection surface 52. Compared with the embodiment shown in FIG. 4, in the embodiment shown in FIG. 6, when the fitting area of the first connection surface 111 and the second connection surface 52 decreases, the stopper 5 is positioned high, so that a position at which the first abutting surface 51 of the stopper 5 abuts against the second abutting surface 231 of the rotating assembly is high. When the foldable apparatus is in the unfolded state, the included angle between the first rotating arm 21 and the second rotating arm 22 is less than 180°. That is, a stopping angle of the stopper 5 to the rotating assembly can be reduced. In this case, the stopping angle is an angle that can meet a user requirement.

Therefore, in this embodiment, a position of the stopper 5 in the height direction Z is controlled, so that precise control over an unfolding angle within a specific range can be implemented when the foldable apparatus is in the unfolded state.

In addition, a position of fitting between the stopper 5 and the rotating assembly corresponding to a case in which the foldable apparatus is in the unfolded state may alternatively be changed by changing a thickness of one stopper 5 or by disposing a plurality of stoppers 5 of different thicknesses, to implement precise control over an unfolding angle within a specific range when the foldable apparatus is in the unfolded state.

The first rotating arm 21 and the second rotating arm 22 each may include a rotating portion 24 and a connection portion 23. The connection portion 23 is rotatably connected to the pin shaft 12, and the connection portion 23 can rotate around the pin shaft 12, to drive the rotating portion 24 to rotate. During rotation of the rotating portion 24, the first housing and the second housing are driven to rotate. The connection portion 23 and the fastened piece enclose at least a part of the mounting space 232, and the second abutting surface 231 is disposed on the connection portion 23.

In the foregoing embodiments, as shown in FIG. 4, the stopper 5 further includes a protrusion portion 53 protruding in the width direction X of the foldable apparatus, and the protrusion portion 53 is located above the mounting space 232. In a process of mounting the stopper 5 in the mounting space 232, when the stopper 5 moves downward, the stopper 5 can abut against the fastened piece, to restrict the stopper 5 from being detached from the mounting space 232 through a lower end opening of the mounting space 232.

Certainly, when the bottom of the mounting space 232 is closed, the stopper 5 may not be provided with the protrusion portion 53, as shown in FIG. 9 and FIG. 10.

As shown in FIG. 7 and FIG. 9, the stopper 5 may further be provided with an avoidance portion 54. The avoidance portion 54 is configured to avoid another component of the foldable apparatus, to prevent interference between the stopper 5 and another part of the foldable apparatus. In addition, the avoidance portion 54 can reduce a weight of the stopper 5, thereby helping implement lightweight of the foldable apparatus.

In the foregoing embodiments, as shown in FIG. 2 and FIG. 3, the stopper 5 includes a first stopper 55 and a second stopper 56. In the width direction X of the foldable apparatus, when the foldable apparatus is in the unfolded state, the first stopper 55 is configured to abut against the first rotating arm 21, and the second stopper 56 is configured to abut against the second rotating arm 22, so that the foldable apparatus is limited to the unfolded state. When the foldable apparatus includes two stoppers 5, a limiting function on the rotating assembly can be further improved, so that reliability and stability of the foldable apparatus in the unfolded state are further improved, and flatness of the flexible display is improved.

In addition, as shown in FIG. 1, each foldable apparatus includes a synchronization gear assembly 3 and a damping assembly 4. The synchronization gear assembly 3 is configured to transfer a motion between the first rotating arm 21 and the second rotating arm 22, so that the first rotating arm 21 and the second rotating arm 22 move synchronously in a folding process and an unfolding process of the foldable apparatus, thereby driving the first housing and the second housing to move synchronously, and improving stability and reliability of the foldable apparatus and the electronic device in the unfolding process and the folding process.

Specifically, the synchronization gear assembly 3 includes four gears that mesh with each other, and the four gears are arranged in the width direction X. The two gears located at edges are respectively connected to the first rotating arm 21 and the second rotating arm 22, and the two gears located in the middle are respectively engaged with the two gears located at the edges. When the first rotating arm 21 and the second rotating arm 22 rotate, the two gears located at the edges can be driven to rotate, thereby driving the two gears located in the middle to rotate.

Therefore, in this embodiment of this application, the first rotating arm 21 and the second rotating arm 22 that abut against the stopper 5 may be two gear swing arms of the foldable apparatus. Certainly, the rotating assembly abutting against the stopper 5 may be another rotating structure, for example, two support boards that are connected to the two gear swing arms and configured to connect to the flexible display.

In the foregoing embodiments, when the folded state is in the unfolded state, the damping assembly 4 provides resistance for the first rotating arm 21 and the second rotating arm 22 to rotate toward each other, so that the foldable apparatus can be maintained in the unfolded state. In addition, when the foldable apparatus needs to switch from the unfolded state to the folded state, the user needs to apply a driving force that can overcome a first damping force to the first rotating arm 21 and the second rotating arm 22. In this way, the first rotating arm 21 and the second rotating arm 22 can overcome the first damping force, so that the foldable apparatus is switched to the folded state. When the foldable apparatus is in the folded state, the damping assembly 4 can provide a second damping force, and the second damping force can act on the first rotating arm 21 and the second rotating arm 22, to provide resistance for the first rotating arm 21 and the second rotating arm 22 to rotate opposite to each other, so that the foldable apparatus can be maintained in the folded state. In addition, when the foldable apparatus needs to switch from the folded state to the unfolded state, the user needs to apply a driving force that can overcome the second damping force to the first rotating arm 21 and the second rotating arm 22. In this way, the first rotating arm 21 and the second rotating arm 22 can overcome the second damping force, so that the foldable apparatus is switched to the unfolded state. In addition, in a process of folding or unfolding the foldable apparatus (in a process in which the first rotating arm 21 and the second rotating arm 22 rotate toward or opposite to each other), the damping assembly 4 can further provide a third damping force, so that a torque is provided for the unfolding process and the folding process of the electronic device, and user experience in the unfolding process and the folding process is improved.

Specifically, as shown in FIG. 1, the damping assembly 4 includes a cam 41 and an elastic member 42, and the cam 41 and the gear of the synchronization gear set 3 are distributed in the length direction Y. The cam 41 has a first concave-convex surface at an end facing the gear in the length direction Y. Correspondingly, the gear has a second concave-convex surface at an end facing the cam 41 in the width direction X. The first concave-convex surface can mesh with the second concave-convex surface. An elastic deformation direction of the elastic member 42 is parallel to the length direction Y of the foldable apparatus, and the elastic member 42 is located on a side that is of the cam 41 and that is away from the gear. In the length direction Y of the foldable apparatus, one end is connected to the cam 41, and the other end is connected to a fastening bracket of the foldable apparatus. That is, when the elastic member 42 elastically deforms, an elastic force in the length direction Y can be applied to the cam 41.

It may be understood that a process in which the first concave-convex surface of the cam 41 meshes with the second concave-convex surface of the gear includes at least the following three cases: In a first case, a convex surface of the first concave-convex surface fits a convex surface of the second concave-convex surface. In this case, the cam 41 moves toward a direction of the corresponding elastic member 42, and compresses the elastic member 42, so that the elastic member 42 has a first deformation amount. In this case, the elastic member 42 in the compressed state can apply a first elastic force to the gear by using the cam 41. In a second case, a convex surface of the first concave-convex surface fits a concave surface of the second concave-convex surface, or a concave surface of the first concave-convex surface fits a convex surface of the second concave-convex surface. In this case, the elastic member 42 in the compressed state can apply a second elastic force to the gear by using the cam 41. The elastic member 42 has a second deformation amount, the second deformation amount is less than the first deformation amount, and the second elastic force is less than the first elastic force. In a third case, a concave surface of the first concave-convex surface fits a concave surface of the second concave-convex surface. In this case, the elastic member 42 in the compressed state can apply a third elastic force to the gear by using the cam 41. The elastic member 42 has a third deformation amount, the third deformation amount is less than the first deformation amount and less than the second deformation amount, and the third elastic force is less than the first elastic force and less than the second elastic force.

In this embodiment, a magnitude of a damping force applied by the damping assembly 4 is determined by a magnitude of an elastic force of the elastic member 42. In addition, during rotation of the first rotating arm 21 and the second rotating arm 22, the gear can rotate accordingly, so that a position of fitting between the first concave-convex surface and the second concave-convex surface is changed, and the position of fitting between the first concave-convex surface and the second concave-convex surface switches in the foregoing three cases.

In a first specific embodiment, when the foldable apparatus is in the folded state or the unfolded state, the foregoing first case may occur. In this case, when the foldable apparatus needs to switch between the folded state and the unfolded state, an applied external force needs to be capable of overcoming the first elastic force of the elastic member 42. In addition, in a process in which the foldable apparatus switches between the folded state and the unfolded state, the foregoing second case or third case may occur. That is, in the folding or unfolding process, the damping assembly 4 can provide a damping force of a same magnitude as the second elastic force or the third elastic force. In a second specific embodiment, when the foldable apparatus is in the folded state or the unfolded state, the foregoing second case may occur. In this case, when the foldable apparatus needs to switch between the folded state and the unfolded state, an applied external force needs to be capable of overcoming the second elastic force of the elastic member 42. In addition, in a process in which the foldable apparatus switches between the folded state and the unfolded state, the foregoing third case may occur. That is, in the folding or unfolding process, the damping assembly 4 can provide a damping force of a same magnitude as the third elastic force.

In addition, in a process in which the first concave-convex surface meshes with the second concave-convex surface, the first concave-convex surface and the second concave-convex surface fit each other by using bevels. That is, an interaction force between the first concave-convex surface and the second concave-convex surface is perpendicular to the bevels (the concave surfaces or the convex surfaces) of the first concave-convex surface and the second concave-convex surface. The interaction force acting on the bevels (the concave surfaces or the convex surfaces) can generate a component force that drives the gear to rotate, to generate a driving force that drives the first rotating arm 21 and the second rotating arm 22 to rotate toward each other or opposite to each other, so that the foldable apparatus can be automatically folded or unfolded.

In this embodiment of this application, the damping assembly 4 further includes a mounting bracket 11. The mounting bracket 11 is configured to mount the damping assembly 4. In the process of folding and unfolding the foldable apparatus, the mounting bracket 11 is in a static state. Therefore, the mounting bracket 11 may serve as the fastened piece configured to fasten the stopper 5 in the foregoing embodiments. Certainly, the fastened piece configured to fasten the stopper 5 may alternatively be another structure other than the mounting bracket 11 of the damping assembly 4, for example, a main shaft of the foldable apparatus.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A foldable apparatus, wherein the foldable apparatus comprises:
a fastened piece; and
a rotating assembly, wherein the rotating assembly comprises a first rotating arm and a second rotating arm that are arranged on two sides of the fastened piece in a width direction of the foldable apparatus, and the first rotating arm and the second rotating arm can rotate relative to the fastened piece, to enable the foldable apparatus to be in a folded state or an unfolded state, wherein
the foldable apparatus further comprises a stopper, the stopper is fastened to the fastened piece or connected to the fastened piece in a position-limiting manner, and when the first rotating arm and the second rotating arm rotate opposite to each other until the foldable apparatus is in the unfolded state, the stopper abuts against the rotating assembly, to restrict the first rotating arm and the second rotating arm from continuing to rotate opposite to each other.

2. The foldable apparatus according to claim 1, wherein the stopper has a first abutting surface, and the rotating assembly has a second abutting surface; and
when the foldable apparatus is in the unfolded state, the second abutting surface abuts against the first abutting surface; and when the foldable apparatus is in the folded state, the second abutting surface is away from the first abutting surface.

3. The foldable apparatus according to claim 2, wherein an included angle between the first abutting surface and the width direction of the foldable apparatus ranges from 85° to 95°.

4. The foldable apparatus according to claim 3, wherein the first abutting surface is perpendicular to the width direction of the foldable apparatus.

5. The foldable apparatus according to claim 1, wherein there is mounting space between the fastened piece and the rotating assembly, and at least a part of the stopper is located in the mounting space; and
the mounting space has an opening in a height direction of the foldable apparatus, and the stopper can be mounted in the mounting space through the opening.

6. The foldable apparatus according to claim 5, wherein a cross-sectional area of the mounting space gradually decreases in a direction close to the opening.

7. The foldable apparatus according to claim 6, wherein the fastened piece has a first connection surface, the first connection surface encloses a part of the mounting space, the stopper has a second connection surface, and the first connection surface is in surface contact with and fastened to the second connection surface; and
the first connection surface and the second connection surface are perpendicular to the width direction of the foldable apparatus.

8. The foldable apparatus according to claim 6, wherein the fastened piece has a first connection surface, the first connection surface encloses a part of the mounting space, the stopper has a second connection surface, and the first connection surface is in surface contact with and fastened to the second connection surface; and
the first connection surface and the second connection surface are both inclined relative to the width direction of the foldable apparatus.

9. The foldable apparatus according to claim 5, wherein the stopper further comprises a protrusion portion protruding in the width direction of the foldable apparatus, and the protrusion portion is located above the mounting space.

10. The foldable apparatus according to any one of claims 1 to 9, wherein the stopper comprises a first stopper and a second stopper, and in the width direction of the foldable apparatus, the first stopper is configured to abut against the first rotating arm, and the second stopper is configured to abut against the second rotating arm.

11. The foldable apparatus according to any one of claims 1 to 9, wherein the foldable apparatus further comprises a synchronization gear set, the synchronization gear set comprises at least two gears, the at least two gears are distributed in the width direction of the foldable apparatus and mesh with each other, and the first rotating arm and the second rotating arm are respectively connected to two gears located at edges.

12. The foldable apparatus according to claim 11, wherein the foldable apparatus further comprises a damping assembly, the damping assembly comprises an elastic member and a cam that abuts against the elastic member, and the cam is located between the gear and the elastic member in a length direction of the foldable apparatus;
in the length direction of the foldable apparatus, the cam has a first concave-convex surface, and the gear has a second concave-convex surface facing the cam; and
during rotation of the first rotating arm and the second rotating arm, the gear can rotate relative to the cam, to enable the first concave-convex surface to mesh with the second concave-convex surface.

13. An electronic device, wherein the electronic device comprises a first housing, a second housing, a flexible display, and the foldable apparatus according to any one of claims 1 to 12, wherein
the first housing and the second housing are located on two sides of the foldable apparatus, and the flexible display covers the first housing, the second housing, and the foldable apparatus, and is fastened to the first housing and the second housing.
